# EUROPÄISCHE PATENTSCHRIFT

(11) **EP 0 585 742 B1**
(45) Veröffentlichungstag und Bekanntmachung des Hinweises auf die Patenterteilung: **18.12.1996**
(21) Anmeldenummer: 93113257.5
(22) Anmeldetag: 19.08.1993
(51) Int. Cl.: C09D 167/06, C09D 175/16, C09D 5/03

(54) **Bindemittel für Pulverlacke**
Binder for powder coatings
Liant pour peinture en poudre

(30) Priorität: 27.08.1992 DE 4228514
(43) Veröffentlichungstag der Anmeldung: 09.03.1994
(73) Patentinhaber: HOECHST AKTIENGESELLSCHAFT, 65926 Frankfurt am Main (DE)
(72) Erfinder: Brindöpke, Gerhard, Dr., D-65843 Sulzbach (DE); Fink, Dietmar, D-65232 Taunusstein (DE); Walz, Gerd, Dr., D-65207 Wiesbaden (DE)

(56) Entgegenhaltungen:
- FR-A- 2 120 807
- US-A- 3 448 172
- US-A- 4 390 662

## Beschreibung

Aus EP-A-0 410 242 sind Polyurethane mit einem Gehalt an (Meth)acryloylgruppen bekannt, die durch Umsetzung von
A) 40-80 Gew.-Teilen eines organischen Polyisocyanats mit
B) 15-50 Gew.-Teilen eines (Meth)acryloylgruppen-aufweisenden einwertigen Alkohols und
C) 2-20 Gew.-Teilen einer weiteren Aufbaukomponente, bestehend aus mindestens einer (Meth)acryloylgruppen-freien Verbindung mit gegenüber Isocyanatgruppen reaktionsfähigen Gruppen hergestellt werden.

Diese Polyurethane dienen als Bindemittel in Pulverlacken, doch zeigen diese Lacke in vielen Fällen eine nicht ausreichende Blockstabilität und es wurde nun gefunden, daß die Blockstabilität dieser Polyurethane verbessert werden kann, wenn man sie mit festen, ungesättigten Polyestern abmischt. Außerdem sind diese Polyester billiger als die genannten Polyurethane, so daß sich durch diesen Ersatz eines Teils der Polyurethane durch die Polyester insgesamt eine Verbilligung für die Pulverlacke ergibt.

In der US-A 3,448,172 werden flexibilisierte Polyesterharz-Zusammensetzungen beschrieben, die neben ungesättigten Polyestern mit Vinylmonomeren modifizierte Polyurethane enthalten. Es handelt sich um (vorzugsweise in Styrol) gelöste Harze, die z.B. mit Peroxiden vernetzt werden.

In der US-A 4,309,662 werden vernetzbare Harzzusammensetzungen beschrieben, die ein acrylmodifiziertes Polyurethan sowie einen ungesättigten Polyester und/oder ein Epoxy-Acrylatharz enthalten. Auch hier handelt es sich um (vorzugsweise in Styrol) gelöste Harze, die mit z.B. Peroxiden vernetzt werden.

Gegenstand der Erfindungsind somit Bindemittel für Pulverlacke, wobei diese Bindemittel aus A) einem festen, ungesättigten Polyester und B) einem (Meth)Acryloylgruppen enthaltenden Polyurethan bestehen.

Als Polyester kommen vorzugsweise solche in Frage, die Hydroxylgruppen und/oder Carboxylgruppen enthalten, Hydroxylzahlen von 5 bis 120, insbesondere von 10 bis 100 mg KOH/g aufweisen, eine Viskosität von weniger als 100 000, insbesondere weniger als 40 000 mPa*s und Schmelzpunkte von 50 ° bis 130 °C, vorzugsweise von 65 bis 120 °C aufweisen. Die Säurezahlen liegen zwischen 2 und 60, vorzugsweise zwischen 2 und 40 mg KOH/g.

Die ungesättigten, festen Polyester werden hergestellt durch die an sich bekannte Kondensation von ungesättigten Dicarbonsäuren oder deren Anhydriden, gegebenenfalls weiteren gesättigten Dicarbonsäuren und mehrwertigen Alkoholen. Der Gehalt an ungesättigten Gruppen (C=C-Gehalt) im Polyester soll 2 bis 20, vorzugsweise 2 bis 15, insbesondere 2 bis 10 % betragen.

Als ungesättigte Dicarbonsäuren kommen insbesondere in Frage Maleinsäure und Fumarsäure bzw. deren Anhydride.

Die gesättigten Dicarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Dimethylolpropionsäure, Hexahydrophthalsäure, Di- und Tetrachlorphthalsäure, Endomethylentetrahydrophthalsäure und ihr Hexachlorderivat, Glutarsäure, dimere und trimere Fettsäuren, wie Ölsäure, gegebenenfalls in Mischung mit monomeren Fettsäuren, Terephthalsäuredimethylester, Terephthalsäure-bis-glykolester, weiterhin cyclische Monocarbonsäuren, wie Benzoesäure, p-tert.-Butylbenzoesäure oder Hexahydrobenzoesäure.

Als mehrwertige Alkohole kommen z.B. Ethylenglykol, Propylenglykol-(1,2) und -(1,3), Butylenglykol-(1,4)-und -(2,3), Di-β-hydroxyethylbutandiol, Hexandiol-(1,6), Octandiol-(1,8), Neopentylglykol, Cyclohexandiol, 1,4-Bis-(hydroxymethyl)-cyclohexan, 2,2-Bis-(4-hydroxy-cyclohexyl)-propan, 2,2-Bis-(4-(β-hydroxyethoxy)-phenyl)-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit, Chinnit, Mannit und Sorbit, Formose und deren Hydroxyalkylierungsprodukte, Methylglykosid, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol in Frage. Auch Mono- und Polyester aus Lactonen, z.B. ε-Caprolacton oder Hydroxycarbonsäuren, wie z.B. Hydroxypivalinsäure, ω-Hydroxydecansäure, ω-Hydroxycapronsäure können eingesetzt werden; Polyester aus den oben genannten Polycarbonsäuren bzw. deren Derivate und Polyphenolen, wie Hydrochinon, Bisphenol-A, 4,4'-Dihydroxybiphenyl oder Bis-(4-hydroxyphenyl)-sulfon; mit Fettsäuren modifizierte Polyester (Ölalkyde) sowie natürlich vorkommende gesättigte oder ungesättigte Polyester, ihre Abbauprodukte oder Umesterungsprodukte mit Polyolen, wie Rizinusöl, Tallöl, Sojaöl, Leinöl; Polyester der Kohlensäure, die aus Hydrochinon, Diphenylolpropan, p-Xylylenglykol, Ethylenglykol, Butandiol oder Hexandiol-1,6 und andere Polyolen durch übliche Kondensationsreaktionen, z.B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind.

Bevorzugte Polyester sind z.B. auch die Reaktionsprodukte von Dicarbonsäuren und Glycidylverbindungen, wie sie z.B. in der DE-OS 24 10 513 beschrieben sind. Beispiele für Glycidylverbindungen, die hierfür verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat oder Cardura E10; Alkylenoxide mit 4 bis 18 Kohlenstoffatomen wie Butylenoxid und Glycidylether, wie Octylenglycidylether. Als Dicarbonsäuren können hier sämtliche wie oben aufgeführten Polycarbonsäuren verwendet werden.

Bevorzugte Komponenten sind auch monomere Ester, z.B. Dicarbonsäure-bis(hydroxyalkohol)ester, Monocarbonsäureester von mehr als 2-wertigen Polyolen und Oligoester, die durch Kondensationsreaktionen aus in der Lackchemie üblichen Rohstoffen hergestellt werden können.

Die festen, ungesättigten Polyester können auf an sich bekannte Weise durch Kondensation in einer Inertgasatmosphäre bei Temperaturen von 100 - 260 °C, vorzugsweise 130 - 220 °C, in der Schmelze oder in azeotroper Fahrweise gewonnen werden, wie es z.B. in Methoden der Organischen Chemie (Houben-Weyl), Bd. 14/2, 1 - 5, 21 - 23, 40 - 44 Georg Thieme Verlag, Stuttgart, 1963 oder bei C.R. Martens, Alkyd Resins, 51 - 59, Reinhold Plastics Appl. Series, Reinhold Publishing Comp., New York, 1961, beschrieben ist.

Der zweite Bestandteil der erfindungsgemäßen Bindemittel sind (Meth)Acryloylgruppen aufweisende Polyurethane, wie sie z.B. in der EP-A-410 242 beschrieben sind. Diese Polyurethane werden erhalten durch Umsetzung von
A) 35-80 Gew.-Teilen einer Polyisocyanatkomponente, bestehend aus mindestens einem organischen Polyisocyanat, mit
B) 15-70 Gew.-Teilen einer (Meth)Acryloylgruppen aufweisenden Alkoholkomponente, bestehend aus mindestens einem (Meth)Acryloylgruppen aufweisenden, ein- oder mehrwertigen Alkohols, und gegebenenfalls
C) 0-30 Gew.-Teilen einer weiteren Aufbaukomponente, bestehend aus mindestens einer (Meth)Acryloylgruppen-freien Verbindung mit gegenüber Isocyanatgruppen reaktionsfähigen Gruppen.

Diese Polyurethane haben einen Schmelzpunkt im Temperaturbereich von 40 bis 180 °C und haben einen Gehalt an olefinischen Doppelbindungen in Form von (Meth)Acryloylgruppen (berechnet als -C = C-, Molekulargewicht = 24) von 2 bis 13 Gew.-%.

Die Herstellung dieser Polyurethane erfolgt durch Umsetzung der obengenannten Ausgangskomponenten A) - C), wobei Art- und Mengenverhältnisse dieser Ausgangskomponenten vorzugsweise so gewählt werden, daß praktisch Isocyanatgruppen-freie Polyurethane mit einem als Zahlenmittel bestimmten Molekulargewicht von 400 bis 10.000 resultieren. Dementsprechend liegt das Equivalentverhältnis aller gegenüber Isocyanatgruppen reaktionsfähigen Gruppen zu den Isocyanatgruppen zwischen 0,9 - 1,1 zu 1,1 - 0,9.

Die Komponente A) besteht aus mindestens einem organischen Polyisocyanat. Geeignete Polyisocyanate sind beliebige, aus der Polyurethanchemie bekannte, organische Polyisocyanate mit aliphatisch, cycloaliphatisch und/oder aromatisch gebundenen Isocyanatgruppen, die vorzugsweise ein Molekulargewicht von 150 bis 1.000, vorzugsweise 168 bis 300 aufweisen. Geeignet sind beispielsweise 1-Isocyanato-3,3,5-trimethyl-5-isocyanatomethyl-cyclohexan, (Isophorondiisocyanat, IPDI), Tetramethylxylylendiisocyanat (TMXDI), Hexamethylendiisocyanat (HDI), Trimethylhexamethylendiisocyanat, 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol, sowie Copolymerisate von α, α'-Dimethyl-meta-isopropenylbenzylisocyanat (TMI).

Ebenfalls geeignet sind Biuret-, Isocyanurat-, Urethan- oder Harnstoff-modifizierte Polyisocyanate auf Basis dieser einfachen Polyisocyanate. Diese Derivate weisen im allgemeinen ein Molekulargewicht bis ca. 1.000 auf. Die Herstellung derartiger Derivate ist beispielsweise in US-PS 3 124 605, US-PS 3 183 112, US-PS 3 919 218 oder US-PS 4 324 879 beschrieben.

Bevorzugt werden als Komponente A) 2,4-Diisocyanatotoluol oder dessen technische Gemische mit bis zu 35 Gew.-%, bezogen auf das Gemisch, an 2,6-Di-isocyanatotoluol, IPDI, TMXDI und/oder durch Trimerisierung von IPDI, TMXDI oder HDI erhaltene Isocyanuratgruppen aufweisende Polyisocyanate verwendet.

Die Komponente B) besteht aus mindestens einem (Meth)Acryloylgruppen aufweisenden, ein- oder mehrwertigen Alkohol. Hierunter sind insbesondere Hydroxyalkylester der Acrylsäure oder Methacrylsäure mit vorzugsweise 2-4 Kohlenstoffatomen im Hydroxyalkylrest wie Hydroxyethyl(meth)acrylat, 2- und 3-Hydroxypropyl(meth)acrylat, 2-, 3- und 4-Hydroxybutyl(meth)acrylat zu verstehen. Es können aber auch in begrenzter Menge Umsetzungsprodukte dieser Hydroxyalkylacrylate mit Caprolacton mitverwendet werden.

Daneben können aber auch Umsetzungsprodukte von Acrylsäure mit Di- oder Polyepoxiden, wie z.B. die Diglycidylether des Bisphenol-A oder F, des Hexandiols, Butandiols oder Neopentylglykols sowie des Cyclohexandimethanol mitverwendet werden. Diese Produkte besitzen dann auch die Eigenschaften der Komponente C und können kettenverlängernd wirken. Ferner eignen sich Trimethylolpropandiacrylat oder Pentaerythrittriacrylat.

Die Komponente C) ist eine Verbindung mit mindestens zwei gegenüber Isocyanatgruppen reaktionsfähigen Gruppen, insbesondere mindestens zwei, vorzugsweise 2-4 und besonders bevorzugt 2-3 alkoholischen Hydroxylgruppen oder gegebenenfalls auch Amingruppen. Die als Komponente C) bzw. als Teil der Komponente C) besonders gut geeigneten Verbindungen weisen ein Molekulargewicht von 62-1000 auf. Beispielhaft genannt seien Ethylenglykol, 1,2- und 1,3-Propandiol, Neopentylglykol, Glycerin, Trimethylolpropan, Trishydroxylethylisocyanurat und Pentaerythrit oder Diethanolamin. Weiterhin als Komponente C) bzw. als Teil der Komponente C) geeignet, jedoch weniger bevorzugt, sind die aus der Polyurethanchemie an sich bekannten höher molekularen Verbindungen, mit gegenüber Isocyanatgruppen reaktionsfähigen Gruppen, insbesondere Hydroxylgruppen, wie beispielsweise die bekannten Polyhydroxypolyether oder - polyester eines über 200 liegenden Molekulargewichts. Genannt seien hier Polycaprolactone oder Polycarbonatdi- oder triole. Es bietet sich aber auch die Mitverwendung von Polyaminen an, was zur Bildung von Harnstoffgruppen führt und die Glastemperatur dieser Polyurethane erhöht.

Geeignete Polyamine sind z.B.: Ethylendiamin, Propylendiamin, 2-Methylpentamethylendiamin, Hexamethylendiamin,Trimethylhexamethylendiamin, Neopentyldiamin, Octamethylendiamin, Triacetondiamin, Dioxadecandiamin und höhere Homologe, cycloaliphatische Diamine wie 1,2-, 1,3- oder 1,4-Cyclohexandiamin; 4,4'-Methylen-bis-cyclohexylamin, 4,4'-Isopropylen-bis-cyclohexylamin, Isophorondiamin, Tricyclododecenyldiamin, Menthandiamin, 4,4'-Diamino-3,3'.dimethyl-di-cyclohexylmethan, 3-Aminomethyl-1-(3-aminopropyl-1-methyl)-4-methylcyclohexan, m-Xylylendiamin, N-Methylethylendiamin, Hydroxyethylamin, -propylamin, N-Aminoethylpiperazin, 2-Aminoethylpiperazin, N,N'-dimethylethylendiamin, -propylendiamin, aliphatische Polyamine wie Diethylentriamin, Triethylentetramin, Tetraethylenpentamin, Pentaethylenhexamin, Iminobispropylamin, Methyliminobispropylamin, Bis(hexamethylen)triamin, Tetrapropylenpentamin.

Ferner sind auch solche Amine geeignet, die neben sekundären oder primären Aminogruppen noch Hydroxylgruppen enthalten wie z.B.:
Hydroxyethyldiethylentriamin oder Bishydroxyethyldiethylentriamin. Weiterhin kommen Monoethanolamin, Diethanolamin, Aminoethylethanolamin, N-(2-hydroxypropyl)ethylendiamin, Mono-, Di-(n oder iso)propanolamin, Ethylenglycolbis-propylamin, Neopentanolamin, Methylethanolamin, 2-(2-Aminoethoxy)-ethanol, 3-Amino-propyl-trialkoxysilan (alkoxy = methoxy-, ethoxy-, tridecyloxy-), 2-Amino-2-hydroxy-methyl-1,3-propandiol, und ähnliche in Frage.

Bevorzugte (Meth)Acryloylgruppenhaltige Polyurethane sind z.B. die Umsetzungsprodukte von Isocyanatgruppen aufweisendem trimerisierten Isophorondiisocyanat mit Hydroxyethylacrylat oder die mit Trimethylolpropan oder Pentaerythrit bzw. die entsprechend mit Caprolacton modifizierten, verzweigten Umsetzungsprodukte von IPDI oder TMXDI mit Hydroxyethylacrylat.

Die Herstellung der Polyurethane durch Umsetzung der genannten Ausgangskomponenten kann in inerten Lösungsmitteln, wie beispielsweise Aceton, Ethylacetat, Butylacetat oder Toluol erfolgen, wobei vorzugsweise Reaktionstemperaturen von 20 bis 150 °C, insbesondere 20 bis 140 °C eingehalten werden. Vorzugsweise wird so vorgegangen, daß zunächst in einem ersten Reaktionsschritt die Umsetzung zwischen der Komponente A) und der Komponente B) durchgeführt wird, worauf sich die Umsetzung des so erhaltenen Umsetzungsprodukts mit der Komponente C) anschließt, bis der Isocyanat-Gehalt auf unter 0,1 Gew.-% abgefallen ist. Die so erhaltene Lösung des Polyurethans in dem Lösemittel wird dann in Wasser gegeben, worauf das Polyurethan ausfällt, das dann abfiltriert wird.

Die zum Polyurethan führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das als Umsetzungsprodukt anfallende Polyurethan bzw. Urethanacrylat kann andererseits durch Zugabe geeigneter Inhibitoren und Antioxidantien wie beispielsweise Phenole und/oder Hydrochinone in Mengen von jeweils 0,001 bis 0,3 Gew.-%, bezogen auf Polyurethan, vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen.

Nach beendeter Umsetzung wird das verwendete Lösungsmittel wieder entfernt. Dies kann z.B. durch Erwärmen der Reaktionslösung unter Vakuum auf 60 - 100 °C geschehen. Die Polyurethane sollten nicht mehr als 1-2 % Restlösemittel enthalten.

Lösungsmittelfreie Polyurethane erhält man auch durch Fertigung der Produkte in nichtprotischen, wassermischbaren Lösungsmitteln wie z.B. Ketonen (Aceton), THF, DMF oder Dimethyldiglykol und anschließender Fällung dieser Lösungen in einen Überschuß von Wasser. Nach Abfiltrieren des ausgefallenen festen Harzes und nach Trocknung weisen diese Produkte keine Restlösemittelgehalte mehr auf, was zu einer wesentlichen Verbesserung der Lagerstabilität führt.

Für den Einsatz in UV-härtbaren Pulverlacken werden diese (Meth)Acryloylgruppen aufweisenden Polyurethane mit den festen ungesättigten Polyestern gemischt. Die Mischungsverhältnisse können dabei je nach gewünschter lacktechnischer Zielsetzung in einem weiten Bereich variiert werden, vorzugsweise kann der Anteil einer der beiden Komponenten 10 bis 95 Gew.-% betragen, wobei dann der Anteil der anderen Komponente den sich auf 100 Gew.-% ergänzenden Rest ausmacht.

Die auf diese Weise erhaltenen Mischungen der beiden Komponenten ergeben wertvolle Bindemittel für Pulverlacke. Sie können ohne weitere Zusätze als hitzevernetzbare Pulver-Klarlacke verarbeitet werden (in welchem Falle das Bindemittel mit dem Überzugsmittel identisch wäre) oder vorzugsweise jedoch gemeinsam mit den aus der Lacktechnologie üblichen Hilfs- und Zusatzmitteln, wie beispielsweise Pigmenten, wie z.B. Titandioxid, Verlaufsmitteln, wie z.B. Polybutylacrylat oder Siliconen und/oder anderen Zusatzstoffen. Diese Mischungen werden auf Extrudern oder Knetern bei Temperaturen von ca. 80 bis 140, vorzugsweise 100-120 °C, homogenisiert. Der hierbei anfallende Feststoff wird dann in an sich bekannter Weise gemahlen und durch Sieben von groben Kornanteilen, vorzugsweise zumindest von solchen mit einer oberhalb 0,1 mm liegenden Korngröße befreit.

Die so hergestellten pulverförmigen Überzugsmittel können nach üblichen Pulverauftragsverfahren, wie z.B. elektrostatischem Pulversprühen oder Wirbelsintern, auf die zu überziehenden Formteile aufgebracht werden. Im Falle von Holz als Substrat kann z.B. vor dem elektrostatischen Versprühen noch ein Leitfähigkeitshilfsmittel aufgebracht werden. Im allgemeinen eignen sich diese Bindemittel sowohl für die Kalt- und Heißbeschichtung; im Falle von großflächigen Substraten wie z.B. Holz-, oder Metallplatten oder Papierbahnen ist auch eine vertikale Beschichtung möglich, ohne das es zu einem Zusammenbacken des Pulvers kommt. Bei diesem Verfahren kann unter Umständen auch auf ein elektrostatisches Versprühen verzichtet werden. Die erfindungsgemäßen Überzugsmassen können zum Lackieren von Substraten, wie Holz, Glas, Metall, Papier oder Kunststoff verwendet werden.

Die Härtung der Überzüge kann entweder durch Erhitzen auf Temperaturen von 130 - 220 °C, vorzugsweise 150 - 190 °C, oder durch die Einwirkung von energiereicher Strahlung wie UV- oder Elektronenstrahlen erfolgen. Im Falle der Vernetzung mittels UV-Bestrahlung ist es notwendig, den Überzugsmassen vor der Homogenisierung Fotoinitiatoren hinzuzufügen. Als Fotoinitiatoren sind die üblicherweise eingesetzten Verbindungen geeignet, wie sie z.B. in der Monographie von J. Kosar, Light-Sensitive Systems, J. Wiley & Sons, New York-London- oder wie sie z.B. in UV&EB Curing Formulations for Printing Inks, Coatings & Paints, ISBN 0 947798 02 1 oder in der deutschen Offenlegungsschrift 38 15 622 beschrieben werden.

Wenn man sehr glatte Überzüge erzielen will, oder wenn man thermisch empfindliches Material pulverbeschichten will, kann man auch sehr vorteilhaft derart verfahren, daß man in einem ersten Schritt das applizierte Pulver mit einem IR-Strahler oberflächlich aufschmilzt bis das Material verlaufen ist und in einem zweiten Schritt kann man dann diese Pulverlackschmelze mittels UV-Licht oder mittels Elektronenstrahlen aushärten.

Als Fotoinitiatoren sind besonders geeignet solche Verbindungen, die in freier Form vorliegen und pulverisierbar sind. Beispiele hierfür sind 1-Hydroxycyclohexylphenylketon, Benzildimethylketal oder - bei pigmentierten Systemen-2-Methyl-1-[4-(methylthio)phenyl]-2-morpholino-propanol-1 oder Trimethyl-benzoyl-diphenyl-phosphinoxid.

Weiterhin gut geeignet sind Benzoinether wie Benzoinisopropylether, Benzilketale, wie z.B. Benzildimethylketal und Hydroxyalkylphenole, wie z.B. 2-Hydroxy-2-methyl-1-phenylpropan-1-on.

Die erwähnten Fotoinitiatoren, die je nach Verwendungszweck der erfindungsgemäßen Massen in Mengen zwischen 0,1 und 10 Gew.-%, vorzugsweise 0,1 bis 5 Gew.-%, bezogen auf das Gewicht des Bindemittels eingesetzt werden, können als einzelne Substanz oder, wegen häufiger vorteilhafter synergistischer Effekte, auch in Kombination miteinander verwendet werden.

Erfolgt die Aushärtung mit Hilfe von Elektronenstrahlen liegt die angelegte Energie zwischen 50 und 500 keV.

### Beispiel 1 (ungesättigter Polyester)

850 Teile Ethylenglykol und 1180 Teile Terephthalsäure und 2 Teile Dibutylzinnoxid werden am Wasserabscheider auf 190 - 200 °C erhitzt. Nach vollständiger Auflösung der Terephthalsäure wird auf 160 °C abgekühlt und mit 570 Teilen Maleinsäureanhydrid und 0,3 Teilen Hydrochinon versetzt. Man erhitzt nun wieder langsam auf 195-200 °C und rührt bei dieser Temperatur solange nach bis eine Säurezahl < 25 mg KOH/g erreicht ist. Man kühlt ab und erhält einen klaren, festen, ungesättigten Polyester, der eine Säurezahl von 24 mg KOH/g und eine Hydroxylzahl von 36 mg KOH/g aufweist. Der Schmelzpunkt des Produktes beträgt 88-92 °C.

### Beispiel 2 (Acrylat)

1470 Teile eines Isocyanuratgruppen aufweisenden Isophorondiisocyanats (NCO-Gehalt: 17,1 %) werden in 540 Teilen Aceton gelöst und mit 1,1 Teilen Dibutylzinndilaurat und 5,3 Teilen Hydrochinonmonomethylether versetzt. Nach Erwärmen auf 50 °C werden 696 Teile Hydroxyethylacrylat zugetropft, anschließend wird bis zu einem NCO-Gehalt < 0,3 % nachgerührt.

Die klare Lösung wird mit weiteren 540 Teilen Aceton verdünnt und anschließend unter starkem Rühren in 18 l Wasser getropft und 30 min lang nachgerührt; der Niederschlag wird abgesaugt und bei Raumtemperatur getrocknet.

Man erhält ein weißes Pulver mit einem Doppelbindungsgehalt von 6,2 %, einer Glastemperatur von 55 °C und einem Schmelzpunkt von 85-90 °C.

### Beispiel 3 (Acrylat)

entspricht Beispiel 1 aus EP 0 410 242, wobei anstelle von Ethylacetat Aceton eingesetzt wurde. Es wurde ansonsten wie in Beispiel 1 gearbeitet.

Das Produkt weist einen Doppelbindungsgehalt von 4,8 % und eine Glastemperatur von 30 °C auf.

### Pulverlackherstellung und Applikation:

### Beispiel 1

558 Teile des ungesättigten Polyesters aus Beispiel 1 und 372 Teile des Acrylates aus Beispiel 2 werden mit 40 Teilen IRGACURE® 651 (handelsüblicher Fotoinitiator der Firma CIBA-Geigy) und mit 30 Teilen ADDITOL® XL 496 (handeslübliches Verlaufsmittel der HOECHST AG) vermischt, extrudiert und zu einem Pulver mit einer durchschnittlichen Korngröße von 50 µm vermahlen.

Nach Applikation auf gereinigte Eisenbleche werden die Lackfilme 10 min auf 140 °C erhitzt und anschließend mit einem UV-Strahler (80 W/min 10 cm Abstand, 10 m/min) bestrahlt. Man erhält einen lösungsmittelfesten, harten kratzbeständigen Überzug.

### Beispiel 2

438 Teile des ungesättigten Polyesters aus Beispiel 1, 292 Teile des Acrylates aus Beispiel 2 und 200 Teile Titandioxyd werden mit 40 Teilen DAROCURE® 64263 (handelsüblicher Fotoinitiator der Firma MERCK) und mit 30 Teilen ADDITOL® XL 496 (handeslübliches Verlaufsmittel der HOECHST AG) vermischt, extrudiert und zu einem Pulver mit einer durchschnittlichen Korngröße von 50 µm vermahlen.

Nach Applikation auf gereinigte Eisenbleche werden die Lackfilme 10 min auf 140 °C erhitzt und anschließend mit einem UV-Strahler (80 W/min 10 cm Abstand, 10 m/min) bestrahlt. Man erhält einen lösungsmittelfesten, harten kratzbeständigen Überzug.

## Patentansprüche

1. Bindemittel für Pulverlacke bestehend aus A) einem festen, ungesättigten Polyester und B) einem (Meth)Acryloylgruppen enthaltenden Polyurethan.

2. Bindemittel nach Anspruch 1, bestehend aus 10 bis 95 Gew.-% der Komponente A) und 90 bis 5 Gew.-% der Komponente B).

3. Bindemittel nach Anspruch 1, dadurch gekennzeichnet, daß die Komponente A) erhalten wird durch Kondensation von ungesättigten Dicarbonsäuren oder deren Anhydriden, gegebenenfalls zusammen mit gesättigten Dicarbonsäuren, und mehrwertigen Alkoholen.

4. Bindemittel nach Anspruch 1, dadurch gekennzeichnet, daß die Komponente A) Hydroxylzahlen von 5 bis 120, Säurezahlen von 2 bis 60, eine Viskosität von weniger als 100 000 mPa.s und einen Schmelzpunkt von 50 bis 130 °C aufweisen.

5. Bindemittel nach Anspruch 1, dadurch gekennzeichnet, daß die Komponente B) durch Umsetzung von
A) 35-80 Gew.-Teilen einer Polyisocyanatkomponente, bestehend aus mindestens einem organischen Polyisocyanat, mit
B) 15-70 Gew.-Teilen einer (Meth)Acryloylgruppen aufweisenden Alkoholkomponente, bestehend aus mindestens einem (Meth)Acryloylgruppen aufweisenden, ein- oder mehrwertigen Alkohols, und gegebenenfalls
C) 0-30 Gew.-Teilen einer weiteren Aufbaukomponente, bestehend aus mindestens einer (Meth)Acryloylgruppen-freien Verbindung mit gegenüber Isocyanatgruppen reaktionsfähigen Gruppen,
erhalten wird.

6. Bindemittel nach Anspruch 1, dadurch gekennzeichnet, daß die Komponente B) durch Reaktion eines trimerisierten, Isocyanurat-Gruppen enthaltenden Isophorondiisocyanats und Hydroxyethyl(meth)acrylat erhalten wird.

7. Bindemittel nach Anspruch 1, dadurch gekennzeichnet, daß die Komponente B) durch Reaktion von Isophorondiisocyanat, Tetramethylxylylendiisocyanat oder Diisocyanatotoluol oder deren Gemischen mit Trimethylolpropan oder Pentaerythrit oder eines caprolactonmodifizierten Trimethylolpropans und mit Hydroxyethylacrylat erhalten werden.

8. Verwendung der Bindemittel nach Anspruch 1 in Pulverlacken, die thermisch oder durch Bestrahlen mit UV-Licht oder Elektronenstrahlen gehärtet werden.

9. Verwendung der Bindemittel nach Anspruch 1 in Pulverlacken zum Beschichten von Holz, Glas, Kunststoffen, Metall und Papier.

## Claims

1. A binder for powder coatings, comprising A) a solid unsaturated polyester and B) a polyurethane containing (meth)acryloyl groups.

2. The binder as claimed in claim 1, comprising 10 to 95 % by weight of component A) and 90 to 5 % by weight of component B).

3. The binder as claimed in claim 1, wherein component A) is obtained by condensation of unsaturated dicarboxylic acids or their anhydrides, if desired together with saturated dicarboxylic acids, with polyhydric alcohols.

4. The binder as claimed in claim 1, wherein component A) has a hydroxyl number of from 5 to 120, an acid number of from 2 to 60, a viscosity of less than 100,000 mPa·s and a melting point of from 50 to 130 °C.

5. The binder as claimed in claim 1, wherein component B) is obtained by reacting
A) 35-80 parts by weight of a polyisocyanate component comprising at least one organic polyisocyanate with
B) 15-70 parts by weight of an alcohol component containing (meth)acryloyl groups, and comprising at least one mono- or polyhydric alcohol containing (meth)acryloyl groups, and if desired
C) 0-30 parts by weight of a further structural component comprising at least one compound which is free from (meth)acryloyl groups and has groups which are reactive towards isocyanate groups.

6. The binder as claimed in claim 1, wherein component B) is obtained by reacting a trimerized isophorone diisocyanate containing isocyanurate groups with hydroxyethyl (meth)acrylate.

7. The binder as claimed in claim 1, wherein component B) is obtained by reacting isophorone diisocyanate, tetramethylxylylene diisocyanate or diisocyanatotoluene or mixtures thereof with trimethylolpropane, pentaerythritol or trimethylolpropane modified with caprolactone, and subsequently reacting with hydroxyethyl acrylate.

8. The use of the binder as claimed in claim 1 in powder coatings which are cured thermally or by irradiation with UV light or electron beams.

9. The use of the binder as claimed in claim 1 in powder coatings for woods, glass, plastics, metal and paper.

## Revendications

1. Liant pour peintures en poudre, constitué A) d'un polyester insaturé solide, et B) d'un polyuréthanne contenant des groupes (méth)acryloyle.

2. Liant selon la revendication 1, constitué de 10 à 95 % en poids du constituant A) et de 90 à 5 % en poids du constituant B).

3. Liant selon la revendication 1, caractérisé en ce qu'on obtient le constituant A) par condensation d'acides dicarboxyliques insaturés ou de leurs anhydrides, éventuellement avec des acides dicarboxyliques saturés, et de polyalcools.

4. Liant selon la revendication 1, caractérisé en ce que le constituant A) présente des indices d'hydroxyle de 5 à 120, des indices d'acide de 2 à 60, une viscosité inférieure à 100 000 mPa.s et un point de fusion de 50 à 130°C.

5. Liant selon la revendication 1, caractérisé en ce qu'on obtient le constituant B) par réaction
A) de 35 à 80 parties en poids d'un constituant polyisocyanate, constitué d'au moins un polyisocyanate organique, avec
B) de 15 à 70 parties en poids d'un constituant alcool comportant des groupes (méth)acryloyle, constitué d'au moins un mono- ou polyalcool comprenant des groupes (méth)acryloyle, et éventuellement
C) de 0 à 30 parties en poids d'un constituant supplémentaire, constitué d'au moins un composé exempt de groupes (méth)acryloyle, comportant des groupes réactifs vis-à-vis des groupes isocyanate.

6. Liant selon la revendication 1, caractérisé en ce que le constituant B) est obtenu par réaction d'un diisocyanate d'isophorone trimérisé, contenant des groupes isocyanurate, et de (méth)acrylate d'hydroxyéthyle.

7. Liant selon la revendication 1, caractérisé en ce que le constituant B) est obtenu par réaction de diisocyanate d'isophorone, de diisocyanate de tétraméthylxylylène ou de diisocyanatotoluène ou de leurs mélanges avec du triméthylolpropane ou du pentaérythritol, ou d'un triméthylolpropane modifié par de la caprolactone et avec de l'acrylate d'hydroxyéthyle.

8. Utilisation des liants selon la revendication 1 dans des peintures en poudre, qui sont durcies par un processus thermique ou par exposition à une lumière UV ou à des rayons électroniques.

9. Utilisation des liants selon la revendication 1 dans des peintures en poudre pour revêtir du bois, du verre, des plastiques, des métaux et des papiers.
